Europäisches Patentamt

European Patent Office

Office européen des brevets

(19)

(11) Numéro de publication: **0 126 695**
**B1**

(12) **FASCICULE DE BREVET EUROPEEN**

(45) Date de publication du fascicule du brevet:
**03.08.88**

(51) Int. Cl.4: **F 16 M 1/08**

(21) Numéro de dépôt: **84401046.2**

(22) Date de dépôt: **18.05.84**

(54) **Structure d'enveloppe ou de panneau composite multicouches.**

(30) Priorité: **19.05.83 FR 8308313**

(43) Date de publication de la demande:
**28.11.84 Bulletin 84/48**

(45) Mention de la délivrance du brevet:
**03.08.88 Bulletin 88/31**

(84) Etats contractants désignés:
**AT BE CH DE FR GB IT LI LU NL SE**

(56) Documents cités:
**EP - A - 0 080 083
DE - A - 1 961 014
DE - A - 2 801 140
DE - A - 2 905 826
DE - A - 3 010 689
DE - C - 740 214
DE - C - 869 576
FR - A - 872 857
FR - A - 2 088 615
GB - A - 599 506
US - A - 1 902 934
US - A - 3 685 773
US - A - 3 721 597
US - A - 3 750 267
US - A - 4 022 648**

(73) Titulaire: **UNION SIDERURGIQUE DU NORD ET DE L'EST
DE LA FRANCE par abréviation "USINOR", La
Défense 9, 4, place de la Pyramide, F-92800 Puteaux
(FR)**

(72) Inventeur: **de Smet, Gabriel, 9 Rue Kielford,
92100 Courbevoie (FR)**

(74) Mandataire: **Moncheny, Michel et al, c/o Cabinet
Lavoix 2 Place d'Estienne d'Orves, F-75441 Paris
Cedex 09 (FR)**

(56) Documents cités: (suite)
**PATENTS ABSTRACTS OF JAPAN, vol. 6, no. 232
(M-172)[1110], 18 novembre 1982; & JP - A - 57 131 844
(TOYOTA JIDOSHA KOGYO K.K.) 14-08-1982**

## Description

La présente invention est relative à une structure d'enveloppe ou de panneau à paroi composite multicouches et notamment à des carters ou panneaux métalliques et à son procédé de fabrication.

Jusqu'à présent les carters mécaniques étaient essentiellement réalisés par coulée de fonte d'acier ou d'alliages légers et devaient comporter des parois suffisamment épaisses pour résister aux efforts qui leur sont demandés et permettre la coulée. La conséquence directe de ces structures épaisses est le poids relativement élevé de ces ensembles.

Par ailleurs, ces ensembles sont réalisés par coulée à des cadences qui sont donc tributaires de ce type d'opération.

De même, dans la fabrication de carrosseries ou d'autres pièces d'enveloppe en tôle, notamment dans l'industrie automobile, on utilise des tôles relativement épaisses pour conférer à l'ensemble la rigidité suffisante. Cependant l'inconvénient de telles tôles est leur poids relativement élevé proportionnel à l'épaisseur.

On a proposé pour la fabrication de carters, d'une part des tôles préformées rendues solidaires par collage, comme montré dans EP-A-80 083, et d'autre part, des tôles préformées rendues solidaires par soudage par points, comme montré dans DE-C-740 214, mais aucune de ces deux techniques n'offre séparément une résistance mécanique suffisante.

La présente invention vise à réaliser notamment des carters ou panneaux à parois composites permettant d'accéder à des cadences de fabrication élevées, tout en diminuant le poids de l'ensemble pour une résistance mécanique équivalente.

La présente invention a ainsi pour objet une structure d'enveloppe ou de panneau à paroi composite, dont la paroi est constituée d'au moins deux tôles mises en forme, comportant des zones dans lesquelles les surfaces en regard sont jointives et rendues solidaires par collage, caractérisée en ce que ces zones sont aussi rendues solidaires par soudage par point et que la paroi comporte des zones dans lesquelles des corps creux sont ménagés entre ces surfaces en regard pour conférer la rigidité voulue aux structures.

Les tôles mises en forme sont notamment des tôles d'acier embouti à haute limite élastique, c'est-à-dire 80 à 100 kg/mm$^2$ et plus.

Les carters peuvent avoir une forme sensiblement plate ou creuse, telle que sphérique ou cylindrique ou toute forme appropriée pour contenir un mécanisme qui doit être protégé ou lubrifié, etc.

La caractéristique essentielle de la présente invention réside dans le fait que la paroi composite de la structure constituée d'un ensemble de tôles collées entre elles par leurs surfaces en regard jointives comporte sur ces mêmes surfaces un certain nombre de points de soudure discrets à un espacement judicieusement choisi. Entre ces surfaces en regard jointives, les tôles forment des corps creux qui sont destinés à conférer la rigidité nécessaire à la paroi du carter ou autre structure. On peut associer en sandwich deux ou plusieurs tôles selon la structure désirée.

L'invention a également pour objet un procédé de fabrication de structures d'enveloppe ou de panneau à paroi composite, consistant à accoler suivant leurs surfaces principales au moins deux tôles mises en forme avec interposition d'une couche d'un matériau d'adhérence, caractérisé en ce qu'on soumet le stratifié ainsi réalisé à une étape de formation de points de soudure et ensuite à un traitement final pour activer le matériau d'adhérence.

Le matériau d'adhérence est une colle déposée préalablement sur au moins la face interne du stratifié d'au moins une tôle formant le sandwich. Cette colle peut se présenter sous forme d'une pellicule déposée au préalable sur une des faces de la tôle permettant ainsi sa manipulation dans une étape industrielle.

Cette colle peut être rendue conductrice de l'électricité par une charge appropriée pour la mise en œuvre suivant le mode de réalisation du procédé décrit ci-après.

Par ailleurs on prévoit suivant une variante de revêtir la tôle d'une première couche superficielle d'un matériau à bas point de fusion tel que par exemple le zinc, le plomb ou l'étain, ou leurs alliages.

Ce matériau à bas point de fusion peut revêtir les deux faces de chaque tôle ou au moins les faces internes du stratifié.

Lorsque la tôle comporte également une couche de colle, cette dernière est déposée sur la couche de matériau à bas point de fusion.

L'étape de formation des points de soudure peut être réalisée suivant deux modes de réalisation.

Selon un premier mode de réalisation, le soudage par point est réalisé par résistance.

Lorsqu'il s'agit de tôles relativement minces (inférieures à 0,8 mm), le soudage par résistance à forte intensité est déconseillé, car il provoque une indentation trop importante pouvant conduire à la perforation de la tôle et en tout état de cause préjudiciable à l'état de surface des tôles.

Dans ce cas on utilise alors un soudage par résistance à faible intensité qui génère une température juste suffisante pour obtenir une fusion du matériau à bas point de fusion tel que le zinc, mais insuffisante pour provoquer une modification substantielle des propriétés mécaniques de la tôle.

Dans le cas du zinc par exemple, il suffit de générer une température au moins égale à 420 °C environ. Outre la formation de points de soudure la présence de Zn permet de protéger la tôle contre la corrosion.

On peut utiliser une intensité encore plus faible et une tôle ne comportant pas un tel matériau à bas point de fusion, de façon à obtenir une température juste suffisante pour développer une polymérisation rapide du matériau d'adhérence sous forme de points qui sont dans ce cas de grande surface et jouent un rôle analogue aux points de soudure décrits ci-dessus. Il est bien entendu nécessaire d'utiliser alors une colle conductrice de l'électricité.

Selon un second mode de réalisation, le soudage par «point» est réalisé par induction de façon à générer par conduction dans la zone médiane du stratifié une température adaptée à la transformation désirée, à savoir fusion du matériau à bas point de fusion, polymérisation rapide de la colle.

Dans le cas d'un chauffage par induction de la colle, il n'est pas nécessaire que la colle soit conductrice de l'électricité.

On fait varier la surface et la forme des «points» suivant la technique utilisée et le nombre que l'on désire réaliser.

Cette étape étant achevée, l'accostage des tôles est réalisé et on fait alors subir au stratifié un traitement final pour activer le matériau d'adhérence, c'est-à-dire polymériser la colle sur toute la surface des plans de jonction.

La colle peut être notamment un matériau thermodurcissable dont la polymérisation est réalisée en étuve à une température classique de l'ordre de 200 °C environ.

Le procédé de fabrication décrit précédemment pour la formation de points de soudure à basse température permet d'obtenir une invisibilité des points indispensable à l'obtention d'un aspect de surface correct pour les carrosseries automobiles, une manipulation des pièces à paroi composite dès la formation des points de soudure et avant l'activation finale de la colle qui pourra être obtenue dans les études de mise en peinture.

En outre la présence en sandwich de la pellicule de colle constitue un écran d'isolation phonique et thermique.

L'invention est exposée ci-après plus en détail à l'aide des dessins annexés qui en représentent seulement deux modes d'exécution.

Sur ces dessins:

la Fig. 1 représente une vue en élévation et en coupe d'un carter de forme sensiblement plate;

la Fig. 2 est une vue de l'un des deux flasques constituant le carter de la Fig. 1;

la Fig. 3 est une vue de l'autre flasque constituant le carter de la Fig. 1;

les Fig. 4 et 5 sont des vues en coupe transversale à deux niveaux différents du flasque de la Fig. 2;

la Fig. 6 est une vue en coupe verticale axiale selon la ligne 6–6 de la Fig. 7, d'un moyeu de roue;

la Fig. 7 est une demi-vue en bout et une demi-vue en coupe radiale selon la ligne 7–7, du moyeu de la Fig. 6.

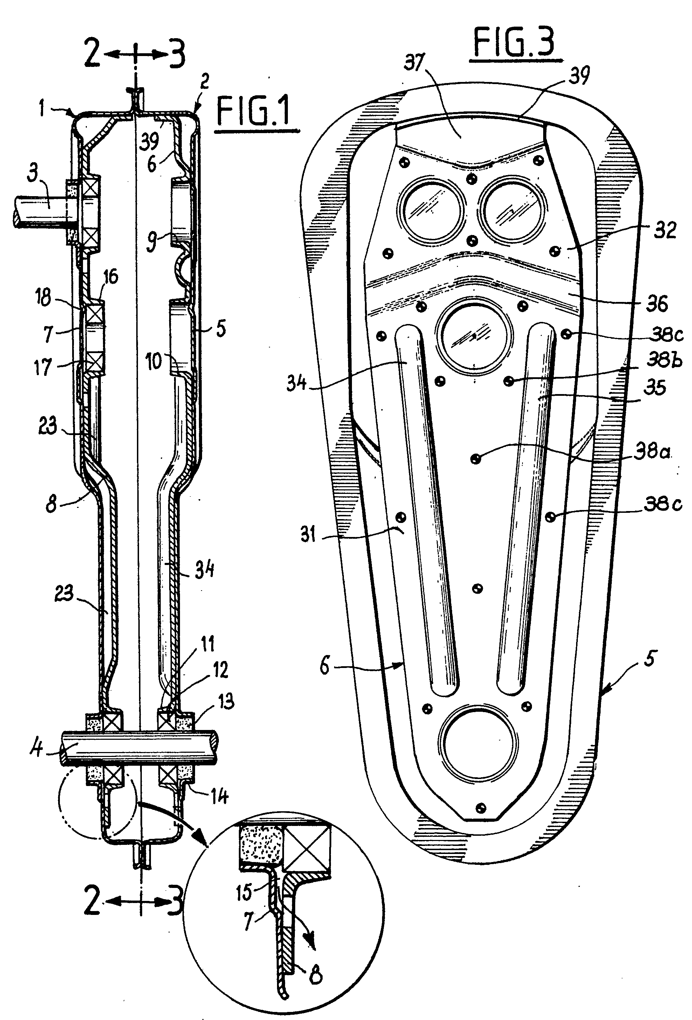

Le carter représenté à la Fig. 1 est un carter destiné à une motobineuse, c'est-à-dire un engin de culture agricole ou maraîchère. Ce carter comporte deux flasques 1 et 2 accolés le long de leurs périphéries délimitant un volume intérieur dans lequel se trouvent les moyens de transmission de la puissance à partir d'un arbre d'entrée 3 relié à un groupe moteur (non représenté) à un arbre de sortie 4 sur lequel sont montés les outils agraires non représentés. Les deux flasques sont rendus solidaires par des moyens classiques, tels que vis-écrou ou éventuellement par collage et soudage par point lorsque l'on veut diminuer le poids de l'ensemble.

Le flasque 2 est constitué de deux parois réalisées en tôle d'acier emboutie, une paroi 5 formant la peau extérieure et une paroi 6 disposée vers l'intérieur du carter, constituant la paroi porteroulements.

De même, le flasque 1 est constitué de deux parois distinctes, à savoir une paroi 7 formant peau extérieure et une paroi 8 disposée vers l'intérieur du carter, formant paroi porte-roulements.

Le flasque 2 représenté à la Fig. 3, constitué de deux parois 5 et 6, comporte des zones sensiblement planes 31, 32 dans lesquelles les surfaces en regard des parois 5, 6 sont étroitement accolées et jointives. Ces zones 31, 32 sont séparées par des corps creux 34, 35, 36 et 37, tels que les nervures. Dans les zones plates étroitement accolées, les cloisons 5 et 6 sont soudées par point, comme représenté par les références 38a, 38b, 38c, etc. et collées ensemble.

Au niveau du corps creux 37 non fermé, comme on peut le voir à la Fig. 1, la paroi porte-roulements 6 est fixée au flanc de la paroi 5 formant plan extérieur par un rebord 39 afin de vaincre les effets de tension de l'ensemble. Cette fixation est réalisée par collage et soudage par point.

Comme représenté à la Fig. 1, la cloison 6 porte-roulements délimite des paliers 9 et 10 recevant des roulements non représentés des moyens de transmission de la puissance entre l'arbre d'entrée 3 et de sortie 4. Les paliers 9 et 10 font saillie vers l'intérieur et ne débouchent pas vers l'extérieur, puisque la cloison 5 forme une peau extérieure continue qui est disposée en regard. Par contre, le palier 11 reçoit un roulement 12, monté sur l'arbre de sortie 4 qui débouche vers l'extérieur à travers une garniture d'étanchéité 13 reçue dans une collerette 14 délimitée dans la paroi 6 formant peau extérieure, et faisant saillie vers l'intérieur.

Les paliers de la paroi porte-roulements représentés à la Fig. 1 ont des dessins différents pour montrer des solutions adaptées à vaincre des effets particuliers.

Ainsi, pour le palier 11, l'appui du roulement 12 est réalisé par des diamètres différents entre le palier 11 et la collerette 14.

Sur le flasque 1 a été représenté un palier 16 portant un roulement 17 pour un arbre des moyens de transmission de la puissance, non représentés. Ce roulement 17 prend appui sur des bossages frappés 18, faisant saillie vers l'intérieur du carter, ménagés dans la paroi extérieure 7.

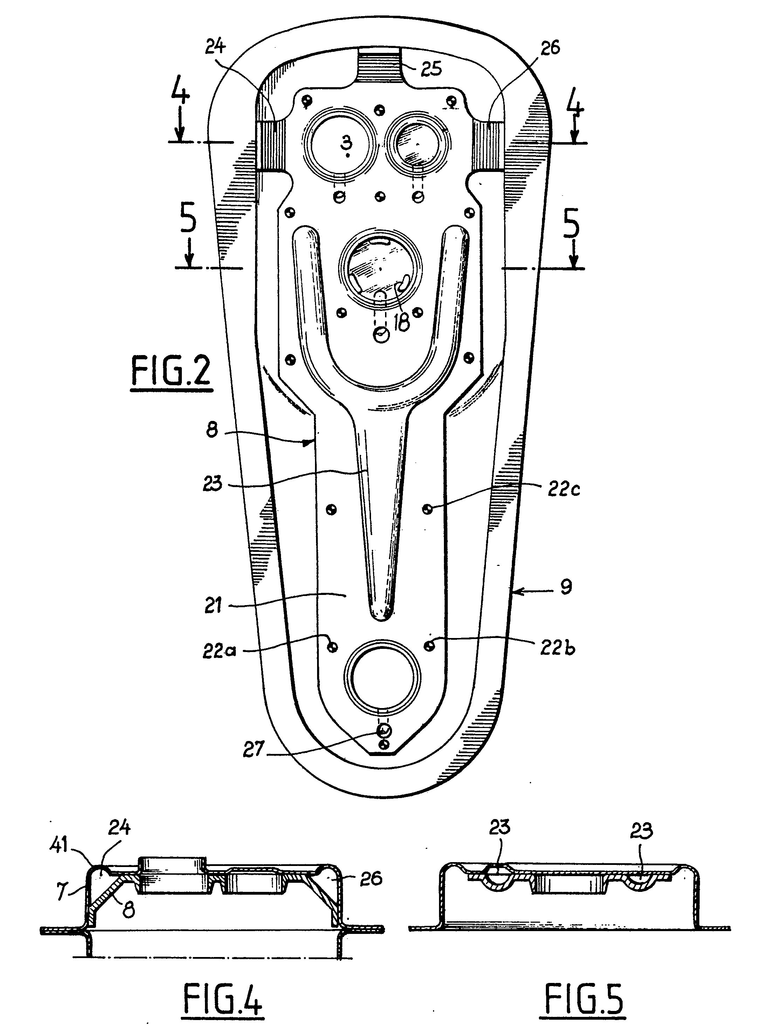

Le flasque 1, représenté à la Fig. 2, constitué des deux parois 8 et 9, comporte des zones 21 dans lesquelles les surfaces planes en regard des parois 8 et 9 accolées sont soudées par point 22a, 22b, 22c, etc. et collées.

Un corps creux formant nervure 23 en forme de Y est ménagé dans une partie sensiblement centrale par rapport à la zone 21. Ce corps creux est fermé, contrairement aux corps creux 24, 25 et 26 ménagés à la partie supérieure du flasque 1. Les corps creux 24, 25 et 26 sont du même type que ceux décrits pour le corps creux 37 du flasque de la Fig. 3 et remplissent la même fonction.

Sur la figure 4, qui est une vue en coupe horizontale du flasque de la Fig. 2, on peut voir les corps creux 24 et 26 délimités entre les parois 7 et 8.

Sur la Fig. 4, on peut également noter une nervure d'emboutissage 41 destinée à tendre la surface.

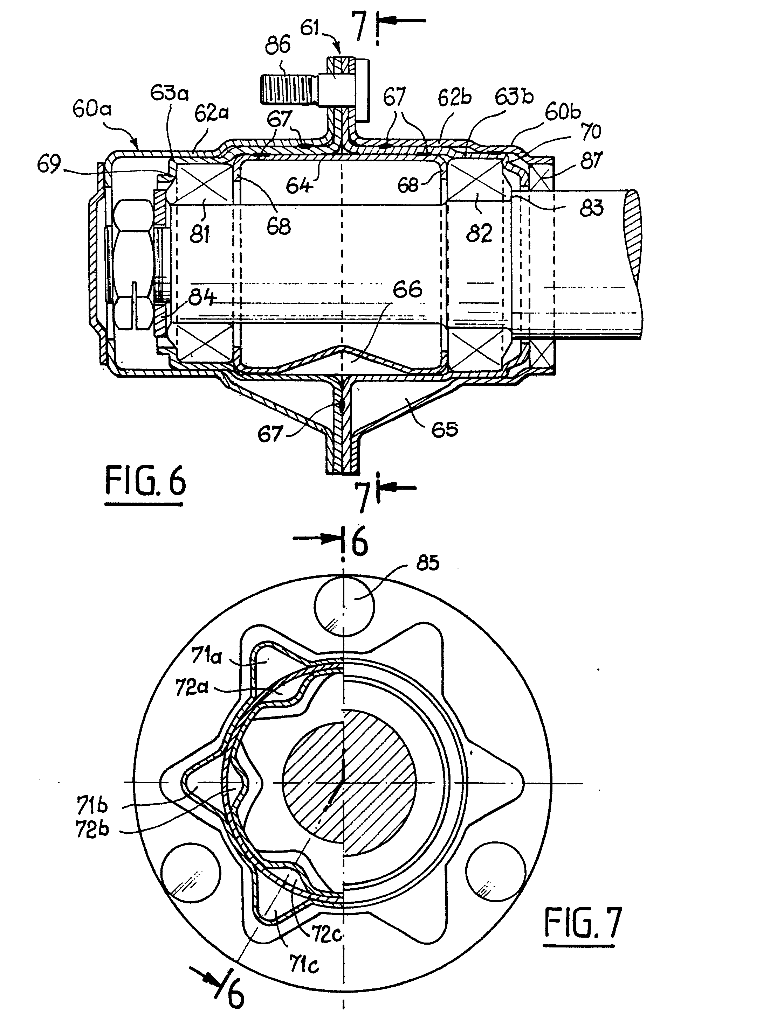

Sur la Fig. 5, représentant une coupe horizontale, au niveau de l'arbre d'entrée 3, on peut noter le corps creux 23 fermé, coupé dans les deux branches supérieures du Y.

On a représenté sur la Fig. 1 dans le détail, l'espace 15 formant canal, ménagé entre la paroi 7 formant peau extérieure et la paroi 8 porte-roulements. Ce canal 15 débouche par un orifice 27 représenté à la Fig. 2 pour le retour de l'huile issue du roulement dans le carter.

Les parois individuelles peuvent avoir des épaisseurs égales ou différentes selon la fonction qu'elles remplissent dans la paroi composite.

Selon un autre mode d'exécution de l'invention, le carter peut être un carter sphérique ou cylindrique.

En particulier, on décrira ci-après à titre d'illustration un carter cylindrique qui est un boîtier à roulements constituant un moyeu de roue non motrice.

Le moyeu de roue représenté à la Fig. 6 présente une paroi composite comportant au moins trois parois individuelles accolées et rendues solidaires par la technique selon la présente invention de collage et de soudage par point.

Ce moyeu est constitué de deux demi-coquilles 60a, 60b en forme de manchon cylindrique à collerette 61. Chaque demi-coquille est constituée d'une paroi extérieure 62a, 62b et d'une paroi intermédiaire 63a, 63b qui sont emboîtées l'une dans l'autre, la paroi intermédiaire 63a, 63b étant emboîtée à l'intérieur de la paroi extérieure 62a, 62b. Les deux demi-coquilles 60a, 60b, sont accolées par leur collerette 61, de sorte qu'au niveau de la collerette l'épaisseur de la paroi composite est quadruple.

A l'intérieur de la partie médiane des deux demi-coquilles 60a, 60b, accolées, est placée une bague annulaire à paroi unique formant paroi intérieure 64 superposée aux parois intermédiaires 63a, 63b, de façon à former dans cette zone une paroi composite à épaisseur triple du moyeu. Cette paroi 64 est superposée aux parois 63a, 63b et 62a, 62b en formant un sandwich rendu rigide par la technique du collage et du soudage par point.

Les diverses parois 62a, 62b et 64 ne sont pas rigoureusement cylindriques, mais comportent des bossages qui définissent des corps creux qui sont un des éléments constitutifs des structures de carter à parois composites selon la présente invention.

Ainsi, comme représenté à la Fig. 7, la paroi 62b vue en coupe suivant la ligne 7–7 de la Fig. 6, forme des bossages 71a, 71b, 71c s'étendant radialement suivant une répartition angulaire régulière qui est, dans le mode de réalisation représenté, de 30°.

Ces bossages 71a, 71b, 71c sont dirigés vers l'extérieur du moyeu.

La paroi 64 forme également des bossages 72a, 72b, 72c analogues au bossage 61, mais dirigés vers l'intérieur et disposés radialement en regard de ces derniers.

Les bossages 71 correspondent respectivement au corps creux 65 de la Fig. 6 et les bossages 72 au corps creux 66 de la Fig. 6.

Les parois 63a, 63b, dans leur partie extérieure à la collerette 61, sont cylindriques et comportent des surfaces qui sont étroitement accolées aux parois 62a, 62b et 64 et rendues solidaires de ces dernières par des points de soudure représentés en 67 et par collage.

De même, pour les quatre parois de la collerette 61, des points de soudure 67 sont régulièrement répartis sur les surfaces périphériques planes.

La paroi 64 comporte des rebords 68 pliés vers l'intérieur qui servent de moyens de positionnement et maintien avec des rebords à épaulement 69 et 70 prévus respectivement dans les parois 63a et 63b, pour le positionnement de roulements à billes 81, 82.

Ces roulements à billes 81, 82 sont montés sur la fusée de roue et également positionnés sur cette dernière à l'aide de divers épaulements 83 et rondelle d'arrêt 84.

La collerette composite 61 comporte des orifices 85 pour le passage de goujons 86 servant à la fixation de divers éléments solidaires du moyeu, tels que les freins et la jante de la roue.

Des moyens d'étanchéité sous forme d'une bague 87 positionnés entre l'extrémité de la paroi 62b, d'une part, et l'extrémité du rebord 70 de la paroi 63b, d'autre part, et la fusée sont classiquement prévus.

Le moyeu de roue ainsi réalisé comporte des parois composites à trois ou quatre épaisseurs ayant des surfaces en regard étroitement accolées formant sandwich, qui sont interposés entre des corps creux conférant la rigidité en torsion voulue du moyeu.

Ce type de moyeu présente l'avantage d'un gain de poids très intéressant pour les masses non suspendues d'un véhicule automobile. On peut noter, par ailleurs, qu'il permet un positionnement et un maintien des roulements à l'aide de rebords judicieusement ménagés dans les diverses parois formées par emboutissage d'une tôle. Les diverses parois étant toutes obtenues par emboutissage, on peut accéder à des cadences de fabrication importantes et, ensuite, fabriquer le moyeu par la technique de collage et de soudage par point. Il est nécessaire, selon la présente invention, que les surfaces en regard superposées pour former un sandwich soient, d'une part, collées et, d'autre part, soudées par points judicieusement répartis. En effet, le collage ne permet pas d'obtenir des résistances à l'arrachement suffisantes et le soudage par point en lui-même conduit à des vibrations des tôles. Lorsque ces deux moyens sont combinés, on peut ainsi obtenir la résistance voulue à l'arrachement et l'absence de vibrations des parois de carter qui deviennent étroitement solidaires et homogènes.

La structure à paroi composite selon la présente invention peut, en outre, être utilisée pour la fabrication de panneaux dans l'automobile, tels que des capots ou des portières ou tout autre élément de carrosserie.

## Revendications

1. Structure d'enveloppe ou de panneau à paroi composite, dont la paroi est constituée d'au moins deux tôles (5, 6) mises en forme, notamment de tôles d'acier embouties, comportant des zones (31, 32) dans lesquelles les surfaces en regard sont jointives et rendues solidaires par collage, caractérisée en ce que ces zones (31, 32) sont aussi rendues solidaires par soudage par point, et que la paroi comporte des zones (34, 35, 36, 37) dans lesquelles des corps creux sont ménagés entre ces surfaces en regard pour conférer la rigidité voulue aux structures.

2. Structure selon la revendication 1, caractérisée en ce que l'enveloppe est un carter sensiblement plat constitué de deux flasques (1, 2) accolés, chaque flasque comportant une paroi (5, 7) formant peau extérieure et une paroi (6, 3) porte-roulements disposée vers l'intérieur du carter, ces parois étant munies d'orifices pour le passage d'arbres.

3. Structure selon la revendication 2, caractérisée en ce que la paroi (6, 8) porte-roulements est munie de paliers (9, 10, 11, 16) venus de matière avec la paroi, supportant des roulements (12, 17).

4. Structure selon la revendication 2, caractérisée en ce que la paroi (5, 7) formant peau extérieure est munie de collerettes (14) venues de matière avec la paroi et recevant des joints d'étanchéité.

5. Structure selon l'une quelconque des revendications 2 à 4, caractérisée en ce que la collerette (14) de la paroi formant peau extérieure et le palier (11) de la paroi porte-roulements ont des diamètres différents pour réaliser un appui du roulement 12.

6. Structure selon l'une quelconque des revendications 2 à 4, caractérisée en ce que la paroi (7) formant peau extérieure comporte en regard de la périphérie du palier (16) de la paroi porte-roulements (8), des bossages frappés (18) faisant saillie vers l'intérieur du carter pour l'appui du roulement (17).

7. Structure selon l'une quelconque des revendications 2 à 6, caractérisée en ce que les parois formant peau extérieure (5, 7) et les parois porte-roulements (6, 8) délimitent entre elles au niveau des paliers des canaux (15) pour le retour de l'huile.

8. Structure selon la revendication 1, caractérisée en ce que l'enveloppe est un boîtier à roulements sensiblement cylindrique, constitué de deux demi-coquilles (60a, 60b) en forme de manchon cylindrique à collerette (61), accolées par la collerette, chaque demi-coquille étant constituée d'une paroi extérieure (62a, 62b) et d'une paroi intermédiaire (63a, 63b) qui sont emboîtées l'une dans l'autre, une paroi intérieure (64) en forme de bague annulaire étant superposée à l'intérieur des parois intermédiaires (63a, 63b) dans la partie médiane des deux demi-coquilles.

9. Structure selon la revendication 8, caractérisée en ce que les corps creux (65, 66) sont des bossages (71a, 71b, 71c) s'étendant radialement suivant une répartition angulaire régulière, respectivement formés entre la paroi extérieure (62a, 62b) et la paroi intermédiaire (63a, 63b) d'une part et la paroi intérieure (64) et la paroi intermédiaire (63a, 63b) d'autre part.

10. Structure selon la revendication 8 ou 9, caractérisée en ce que la paroi intérieure (64) comporte des rebords (68) pliés vers l'intérieur qui constituent avec des rebords à épaulement (69, 70) ménagés dans les parois intermédiaires (63a, 63b) des moyens de positionnement et de maintien de roulements (81, 82).

11. Procédé de fabrication de structures d'enveloppe ou de panneau à paroi composite, consistant à accoler suivant leurs surfaces principales au moins deux tôles mises en forme avec interposition d'une couche d'un matériau d'adhérence, caractérisé en ce qu'on soumet le stratifié ainsi réalisé à une étape de formation de points de soudure et ensuite à un traitement final pour activer le matériau d'adhérence.

12. Procédé selon la revendication 11, caractérisé en ce que le matériau d'adhérence est une colle déposée préalablement sur au moins la face interne du stratifié d'au moins une tôle.

13. Procédé selon la revendication 12, caractérisé en ce que la colle est chargée d'un matériau la rendant conductrice de l'électricité.

14. Procédé selon l'une quelconque des revendications 11 à 13, caractérisé en ce que au moins la face interne des tôles formant le stratifié comporte comme première couche superficielle une couche d'un matériau à bas point de fusion.

15. Procédé selon la revendication 14, caractérisé en ce que le matériau à bas point de fusion est le zinc, le plomb, l'étain ou leurs alliages.

16. Procédé selon l'une quelconque des revendications 11 à 15, caractérisé en ce que les points de soudure sont réalisés par soudage électrique par résistance à faible température.

17. Procédé selon l'une quelconque des revendications 11 à 15, caractérisé en ce que les points de soudage sont réalisés par induction électrique.

## Claims

1. A composite-wall case or panel structure, wherein said wall comprises at least two shaped sheets, more particularly pressed steel sheets, having regions (31, 32) in which confronting surfaces thereof are in adjoining relation to each other and interconnected by bonding, characterised in that these regions (31, 32) are spot-welding, and that the wall has regions (34, 35, 36, 37) in which hollow bodies are formed between said confronting surfaces for imparting the required rigidity to the structure.

2. A structure according to claim 1, characterised in that said case is a substantially flat housing comprising two assembled side walls (1, 2), each side wall comprising a wall (5, 7) constituting an outer shell and a bearing-carrying wall (6, 3) located inside said housing, said walls being provided with apertures for the passage of shafts.

3. A structure according to claim 2, characterised in that said bearing-carrying wall (6, 8) is provided with bearing housings (9, 10, 11, 16) which are an integral part of said bearing-carrying wall, supporting bearings (12, 17).

4. A structure according to claim 2, characterised in that said wall (5, 7) constituting an outer shell is provided with annular flanges (14) which are an integral part of said wall and receive sealing elements.

5. A structure according to any one of claims 2 to 4, characterised in that the flange (14) of the wall constituting an outer shell and the bearing housing (11) of said bearing-carrying wall have different diameters so as to provide a support for bearing (12).

6. A structure according to any one of claims 2 to 4, characterised in that the wall (7) constituting an outer shell defines, in facing relation to the periphery of the bearing housing (16) of the bearing-carrying wall (8), stamped bosses (18) which project into the housing for supporting the bearing (17).

7. A structure according to any one of claims 2 to 6, characterised in that said wall constituting an outer shell (5, 7) and said bearing-carrying walls (6, 8) define therebetween, in a region of said bearing housings, channels (15) for the return of oil.

8. A structure according to claim 1, characterised in that the case is a substantially cylindrical bearing case comprising two half-shells (60a, 60b) which are each in the shape of a cylindrical sleeve having a flange (61) and are assembled by said flanges, each half-shell having an outer wall (62a, 62b) and an intermediate wall (63a, 63b) which are fitted one inside the other, and an inner wall (64) in the shape of an annular ring superimposed inside the intermediate walls (63a, 63b) in a median part of the two half-shells.

9. A structure according to claim 8, characterised in that said hollow bodies (65, 66) are bosses (71a, 71b, 71c) which extend radially in an evenly angularly spaced-apart disposition and are respectively formed between the outer wall (62a, 62b) and the intermediate wall (63a, 63b) on the one hand and between the inner wall (64) and the intermediate wall (63a, 63b) on the other hand.

10. A structure according to claim 8 or 9, characterised in that the inner wall (64) has inwardly-folded flanges (68) which constitute, with shoulder-defining flanges (69, 70) formed in the intermediate walls (63a, 63b), means for positioning and maintaining bearings (81, 82).

11. A method for producing a composite-wall case or panel structure, said method comprising taking at least two shaped sheets each having a main surface, assembling said sheets on their main surfaces, with interposition of a layer of a bonding material, characterised in that the laminated structure thus formed is subjected to a spot-welding step and thereafter to a final treatment for activating said bonding material.

12. A method according to claim 11, characterised in that said bonding material is an adhesive previously applied to at least the inner surface of at least one sheet of said laminated structure.

13. A method according to claim 12, characterised in that the adhesive has a filler of a material which renders it electrically conductive.

14. A method according to any one of claims 11 to 13, characterised in that at least the internal surfaces of the sheets of said laminated structure each have a layer of a material with a low melting point as a surface layer.

15. A method according to claim 14, characterised in that said material having a low melting point is zinc, lead, tin or alloys thereof.

16. A method according to any one of claims 11 to 15, characterised in that the spot-welding is produced by a low-temperature electric resistance welding.

17. A method according to any of one claims 11 to 15, characterised in that the spot-welding is produced by electric induction.

**Patentansprüche**

1. Verbundwand-Hüll- oder -Plattenaufbau, dessen Wand aus wenigstens zwei verformten Blechen (5, 6), insbesondere getieften Stahlblechen, aufgebaut ist, welche Zonen (31, 32) aufweisen, in welchen die einander zugekehrten Flächen aneinanderstossend und durch Klebung miteinander verbunden sind, dadurch gekennzeichnet, dass diese Zonen (31, 32) auch durch Punktschweissung miteinander verbunden sind und dass die Wand Zonen (34, 35, 36, 37) aufweist, in welchen zwischen den einander zugekehrten Flächen Hohlkörper ausgespart sind, durch welche den Aufbauten die gewünschte Steifigkeit verliehen wird.

2. Aufbau nach Anspruch 1, dadurch gekennzeichnet, dass die Hülle ein aus zwei zusammengefügten Flanschen (1, 2) gebildetes im wesentlichen flaches Gehäuse ist, wobei jeder Flansch eine Wand (5, 7), welche die Aussenhaut bildet, und eine Wälzlagerträgerwand (6, 3), welche zur Innenseite des Gehäuses hin angeordnet ist, aufweist, wobei diese Wände mit Öffnungen für einen Durchtritt von Wellen versehen sind.

3. Aufbau nach Anspruch 2, dadurch gekennzeichnet, dass die Wälzlagerträgerwand (6, 8) mit der Wand einstückigen Lagerstützen (9, 10, 11, 16), welche die Wälzlager (12, 17) tragen, versehen ist.

4. Aufbau nach Anspruch 2, dadurch gekennzeichnet, dass die die Aussenhaut bildende Wand (5, 7) mit mit der Wand einstückigen und Dichtungen aufnehmenden Krägen (14) versehen ist.

5. Aufbau nach irgendeinem der Ansprüche 2 bis 4, dadurch gekennzeichnet, dass der Kragen (14) der die Aussenhaut bildenden Wand und die Lagerstütze (11) der Wälzlagerträgerwand zur Bildung einer Anlage für das Wälzlager (12) unterschiedliche Durchmesser haben.

6. Aufbau nach irgendeinem der Ansprüche 2 bis 4, dadurch gekennzeichnet, dass die die Aussenhaut bildende Wand (7) dem Umfang der Lagerstütze (16) der Wälzlagerträgerwand (8) zugekehrt geprägte Buckel (18) aufweist, die zur Bildung einer Anlage für das Wälzlager (17) zur Innenseite des Gehäuses hin vorspringen.

7. Aufbau nach irgendeinem der Ansprüche 2 bis 6, dadurch gekennzeichnet, dass die die Aussenhaut bildenden Wände (5, 7) und die Wälzlagerträgerwände (6, 8) zwischen sich auf Höhe der Lager Kanäle (15) für die Rückführung von Öl begrenzen.

8. Aufbau nach Anspruch 1, dadurch gekennzeichnet, dass die Hülle ein im wesentlichen zylindrisches Wälzlagergehäuse ist, welches aus zwei Halbschalen (60a, 60b) in Zylinderhülsenform mit Kragen (61), die über den Kragen zusammengefügt sind, besteht, wobei jede Halbschale durch eine Aussenwand (62a, 62b) und eine Zwischenwand (63a, 63b), die ineinander geschachtelt sind, gebildet ist, wobei eine Innenwand (64) in Form eines Reifs über das Innere der Zwischenwände (63a, 63b) im Mittelteil der beiden Halbschalen gelegt ist.

9. Aufbau nach Anspruch 8, dadurch gekennzeichnet, dass die Hohlkörper (65, 66) sich radial gemäss einer regelmässigen Winkelverteilung erstreckende Buckel (71a, 71b, 71c) sind, welche jeweils zwischen der Aussenwand (62a, 62b) und der Zwischenwand (63a, 63b) einerseits und der Innenwand (64) und der Zwischenwand (63a, 63b) andererseits ausgebildet sind.

10. Aufbau nach Anspruch 8 oder 9, dadurch gekennzeichnet, dass die Innenwand (64) nach innen umgelegte Ränder (68) aufweist, welche mit in den Zwischenwänden (63a, 63b) ausgebildeten Schulterrändern (69, 70) Mittel zum Positionieren und Instellunghalten von Wälzlagern (81, 82) bilden.

11. Verfahren zur Herstellung von Verbundwand-Hüll- und -Plattenaufbauten, welches in einem Zusammenfügen von wenigstens zwei verformten Blechen längs ihrer Hauptflächen unter Zwischenlage einer Schicht eines Haftmaterials besteht, dadurch gekennzeichnet, dass man den so hergestellten Schichtstoff einem Verfahrensschritt der Ausbildung von Punktschweissungen und dann einer Fertigbehandlung für ein Aktivieren des Haftmaterials unterwirft.

12. Verfahren nach Anspruch 11, dadurch gekennzeichnet, dass das Haftmaterial ein Kleber ist, welcher vorab auf wenigstens der Schichtstoffinnenfläche wenigstens eines Bleches aufgebracht wird.

13. Verfahren nach Anspruch 12, dadurch gekennzeichnet, dass der Kleber mit einem ihn elektrisch leitend machenden Material beaufschlagt wird.

14. Verfahren nach irgendeinem der Ansprüche 11 bis 13, dadurch gekennzeichnet, dass wenigstens die Innenseite der den Schichtstoff bildenden Bleche als erste Oberflächenschicht eine Schicht aus einem Material mit niedrigem Schmelzpunkt aufweist.

15. Verfahren nach Anspruch 14, dadurch gekennzeichnet, dass das Material mit niedrigem Schmelzpunkt Zink, Blei, Zinn oder deren Legierungen ist.

16. Verfahren nach irgendeinem der Ansprüche 11 bis 15, dadurch gekennzeichnet, dass die Schweisspunkte durch Widerstandselektroschweissung bei niedriger Temperatur realisiert werden.

17. Verfahren nach irgendeinem der Ansprüche 11 bis 15, dadurch gekennzeichnet, dass die Schweisspunkte durch elektrische Induktion realisiert werden.

FIG.1

FIG.3

FIG.2

FIG.4

FIG.5

FIG.6

FIG.7